# FASCICULE DE BREVET EUROPEEN

(11) **EP 0 647 787 B1**
(45) Date de publication et mention de la délivrance du brevet: **31.03.1999**
(21) Numéro de dépôt: 94402258.1
(22) Date de dépôt: 07.10.1994
(51) Int. Cl.: F16C 7/04, B60K 5/12

(54) **Biellette de reprise de couple pour moteur de véhicule**
Drehmomentanlaufschwingarm für Motoren von Kraftfahrzeugen
Torque starting rocker bar for motors of vehicles

(30) Priorité: 11.10.1993 FR 9312071
(43) Date de publication de la demande: 12.04.1995
(73) Titulaire: HUTCHINSON, 75008 Paris (FR)
(72) Inventeur: Girard, André, F-28200 La Chapelle du Noyer (FR); Pellé, Thierry, F-41160 Danzé (FR)
(74) Mandataire: Picard, Jean-Claude Georges

(56) Documents cités:
- EP-A- 0 320 088
- CH-A- 268 266
- DE-U- 8 521 933
- FR-A- 2 473 662
- FR-A- 2 555 688

## Description

La présente invention concerne une biellette de reprise de couple pour moteur de véhicule, notamment pour la suspension pendulaire d'un groupe motopropulseur à boîte automatique, du type comportant à au moins l'une de ses extrémités une articulation tubulaire élastique, à savoir qu'elle comprend un noyau intérieur de fixation et au moins un coussin de matériau élastique reliant par adhérisation ledit noyau à la surface interne d'une armature tubulaire extérieure.

Le document FR-A-2 473 662 (D1) décrit (figures 7 et 8) une biellette du même type général, mais il s'agit ici en particulier d'une biellette pour la liaison d'un moteur sur le châssis d'un véhicule automobile, et qui n'est pas conçue spécialement pour le cas où le groupe motopropulseur comporte une boîte de vitesses automatique.

Sur un véhicule à boîte automatique à l'arrêt, il arrive fréquemment que par commodité le conducteur laisse le levier de commande de cette boîte en position "drive" pour être prêt à repartir sur un simple coup d'accélérateur ; pendant cet arrêt, le pied doit rester sur la pédale de frein pour empêcher le véhicule d'avancer sous l'effet du couple moteur résiduel. Ce couple, bien entendu, sollicite la biellette de la suspension pendulaire du moteur. De ce fait, le ou les coussins de matériau élastique (caoutchouc ou élastomère) sont soumis à une contrainte qui déplace leur point de fonctionnement et l'amène dans une plage où sa raideur peut être augmentée de façon sensible, par rapport à celle de la zone centrale de la plage de fonctionnement à plus faible raideur. Il peut en résulter une augmentation notable des vibrations (désagréables) qui se transmettent du moteur à la caisse et donc à l'habitacle du véhicule.

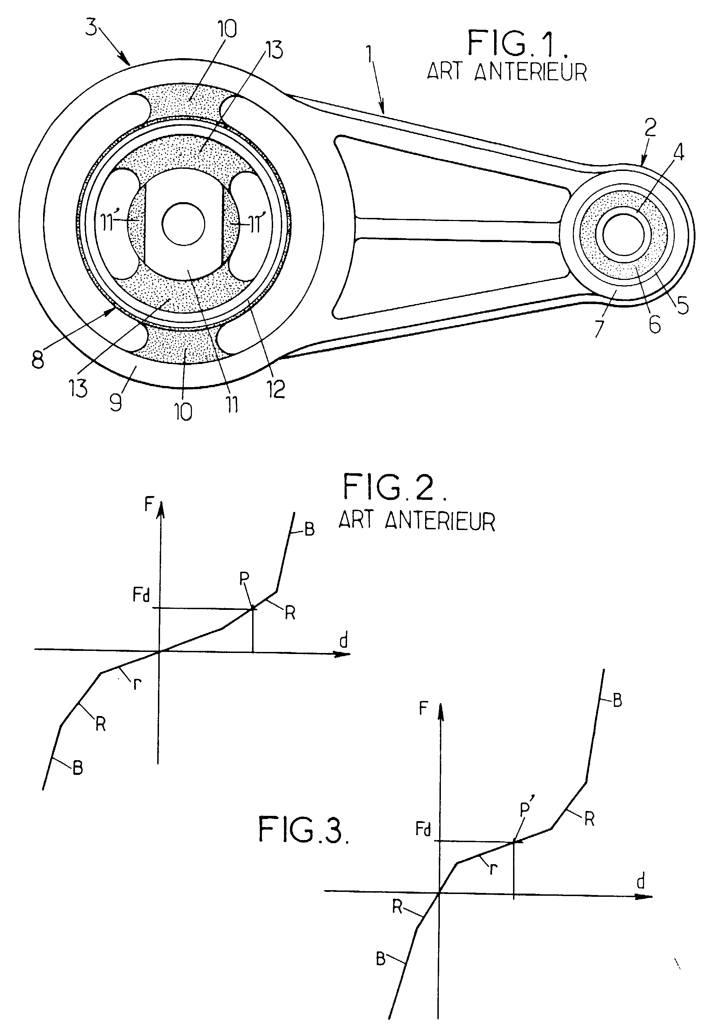

La figure 1 est une vue de face d'une telle biellette de la technique antérieure, et la figure 2 représente son diagramme de fonctionnement F = f(d), F représentant les efforts axiaux et d les déplacements correspondants.

Sur la figure 1, la référence 1 désigne le corps de la biellette, qui porte à ses extrémités des articulations élastiques référencées 2 et 3, les parties métalliques étant réalisées par exemple en alliage d'aluminium moulé. L'articulation 2 comporte, de façon classique, un tube intérieur de fixation 4 relié à un tube extérieur 5 par un coussin annulaire d'élastomère 6 adhérisé sur ses deux faces de liaison. Ce tube extérieur 5 est calé dans l'armature tubulaire extérieure 7 de cette articulation.

A l'autre extrémité, l'articulation 3 de la biellette comporte un noyau de fixation 8 relié à une armature tubulaire extérieure 9 par deux coussins latéraux d'élastomère 10 adhérisés sur leurs deux faces de liaison. Le noyau de fixation 8 est lui-même constitué d'une articulation élastique, de sorte à obtenir deux étages de raideur. Ce noyau comporte à cet effet un axe central de fixation 11 et un tube intermédiaire 12 reliés l'un à l'autre par des coussins d'élastomère latéraux adhérisés 13 ; la référence 11' désigne deux butées élastiques de compression, revêtant deux méplats opposés de l'axe 11. Les coussins élastiques extérieurs 10 étant de section notablement plus réduite que celle des coussins élastiques intérieurs 13, ils fournissent la plage de fonctionnement à faible raideur r du diagramme de la figure 2, tandis que les coussins 13 fournissent les plages de fonctionnement à plus forte raideur R, B représentant les zones de butée.

On voit bien sur la figure 2 que du fait du couple résiduel du moteur, soumettant la biellette à une contrainte axiale Fd, le point de fonctionnement P de l'articulation 3 va se trouver dans une zone R et non pas dans la zone r, avec l'inconvénient résultant mentionné plus haut.

Le but de la présente invention est de remédier à cet inconvénient, et à cet effet une biellette du type défini plus haut est, conformément à l'invention, caractérisée en ce que le ou les coussins sont soumis à une précontrainte orientée dans la direction principale des efforts de traction et de compression qui agissent sur la biellette, à savoir sa direction axiale, le sens de cette précontrainte étant tel que lorsque la biellette est soumise à un effort axial résiduel dû à la force motrice du moteur au ralenti, la boîte automatique étant en position "drive" (marche avant), le ou les coussins reprennent la forme pour laquelle leur point de fonctionnement se situe approximativement au milieu de sa plage à raideur minimale.

Le diagramme F = f(d) de la figure 3 représente le nouveau fonctionnement de la biellette : au repos, c'est-à-dire avant son montage, la raideur des coussins élastiques 10 se situe dans la zone à raideur relativement forte R, du fait de la précontrainte à laquelle ils sont soumis ; sous la charge Fd due au moteur tournant au ralenti, leur point de fonctionnement se déplace en P', dans la zone à plus faible raideur r, ce qui résoud le problème posé plus haut.

D'autres dispositions de l'invention apparaîtront à la lecture de l'exemple nullement limitatif décrit ci-dessous avec référence aux figures du dessin ci-annexé dans lequel :

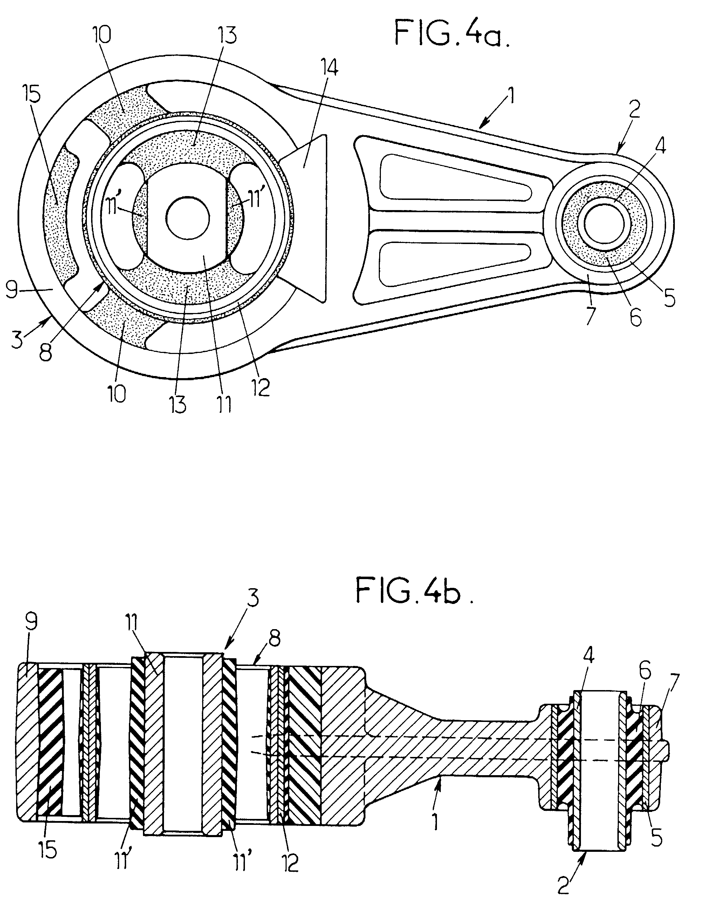

- la figure 4a représente une biellette conforme à l'invention, vue de face, avant son montage ;
- la figure 4b est une vue en coupe axiale de cette biellette ;
- la figure 5a et la figure 5b sont les vues respectivement correspondantes de cette biellette après son montage et soumise à l'effort précité Fd.

Sur ces quatre figures on a représenté une biellette du même type général que celle de l'art antérieur, et on a donc utilisé les mêmes références numériques que ci-dessus pour désigner les éléments correspondants ou équivalents.

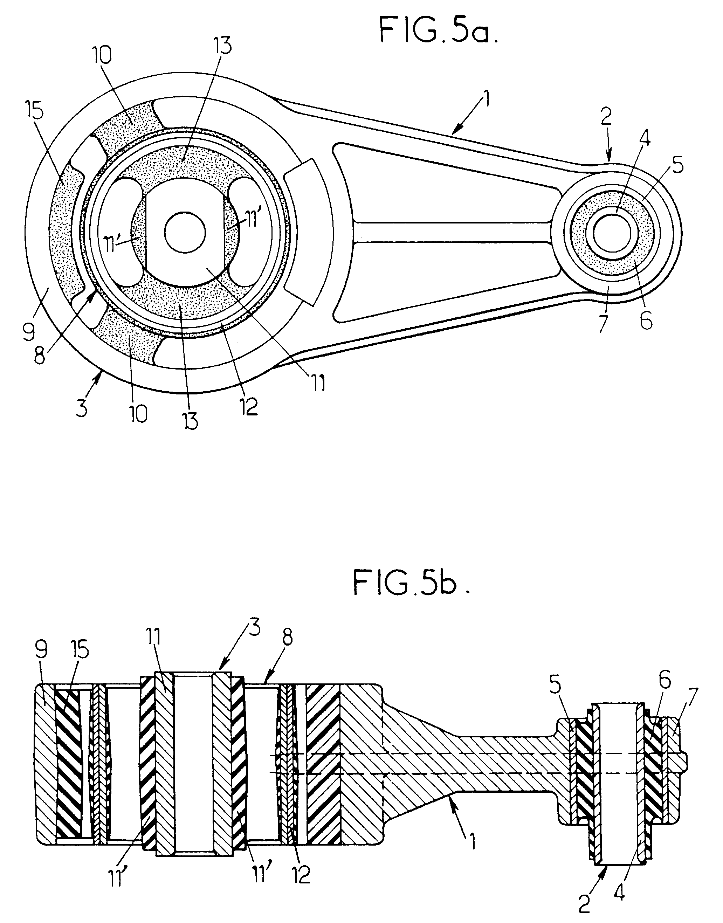

Il est à noter que les coussins élastiques 10 de l'invention, au nombre de deux dans cet exemple, ne sont pas radiaux ni diamétralement opposés l'un à l'autre, comme dans le mode de réalisation illustrant l'art antérieur, mais symétriquement décalés vers l'extrémité adjacente de la biellette de sorte à être inclinés sur l'axe de cette dernière. Ils sont soumis à une précontrainte grâce à l'introduction, après leur moulage, d'une cale 14 en matière synthétique rigide entre le corps 1 de la biellette et le tube intermédiaire 12 du noyau 8, cette cale se situant sensiblement sur l'axe de la biellette. Cette précontrainte est telle, de préférence, que l'axe 11 reste légèrement décalé vers la petite extrémité de la biellette, par rapport à l'axe géométrique de l'armature extérieure 9. Le moulage des coussins 10 est calculé aussi de telle manière que le déplacement axial du noyau de fixation 8 vers la gauche, lorsque la biellette est montée et soumise à l'effort Fd dû à l'entraînement résiduel du moteur, les ramène en position radiale, comme visible sur la figure 5a, en même temps que l'axe 11 vient se recentrer sur l'axe géométrique de l'armature 9. On conçoit que ces dispositions permettent alors à la biellette de fonctionner (en P') idéalement dans la zone médiane de la plage de fonctionnement r à faible raideur (figure 3), au lieu de fonctionner dans une plage à plus forte raideur R.

Le fait de décaler angulairement (et symétriquement) les coussins 10 par rapport au diamètre transversal de l'armature tubulaire 9 leur permet en outre de travailler en cisaillement et compression.

Enfin, on a référencé en 15 une butée de compression propre à limiter la déformation axiale de la biellette lorsque le moteur la soumet aux efforts de traction les plus importants, la cale diamétralement opposée 14 servant par ailleurs de butée limitant la déformation axiale de la biellette lorsque le moteur la soumet aux efforts de compression les plus importants.

## Revendications

1. Biellette de reprise de couple pour moteur de véhicule, notamment pour la suspension pendulaire d'un groupe motopropulseur à boîte automatique, du type comportant à au moins l'une de ses extrémités une articulation tubulaire élastique (3), à savoir qu'elle comprend un noyau intérieur de fixation (8) et au moins un coussin de matériau élastique (10) reliant par adhérisation ledit noyau (8) à la surface interne d'une armature tubulaire extérieure (9), caractérisée en ce que le ou les coussins (10) sont soumis à une précontrainte orientée dans la direction principale des efforts de traction et de compression qui agissent sur la biellette, à savoir sa direction axiale, le sens de cette précontrainte étant tel que lorsque la biellette est soumise à un effort axial résiduel (Fd) dû à la force motrice du moteur au ralenti, la boîte automatique étant en position "drive" (marche avant), le ou les coussins (10) reprennent la forme pour laquelle leur point de fonctionnement (P') se situe approximativement au milieu de sa plage (r) à raideur minimale.

2. Biellette selon la revendication 1, caractérisée en ce que le maintien en précontrainte du ou des coussins (10) est assuré par une cale (14) rigide, intercalée entre le corps (1) de la biellette et ledit noyau (8), sensiblement sur l'axe de la biellette.

3. Biellette selon la revendication 1 ou 2, caractérisée en ce que lesdits coussins (10) sont au nombre de deux et sont inclinés sur l'axe de la biellette.

4. Biellette selon l'une quelconque des revendications précédentes, caractérisée en ce que le moulage desdits coussins (10) est tel qu'après montage de la biellette et application dudit effort axial résiduel (Fd), le déplacement axial dudit noyau de fixation (8) les ramène en position radiale.

5. Biellette selon l'une quelconque des revendications précédentes, caractérisée en ce qu'avant montage ladite précontrainte est telle que l'axe géométrique dudit noyau de fixation (8) soit légèrement décalé axialement par rapport à l'axe géométrique de ladite armature tubulaire extérieure.

6. Biellette selon l'une quelconque des revendications 2 à 5, caractérisée en ce qu'elle comporte une butée de compression (15) diamétralement opposée à ladite cale (14).

7. Biellette selon l'une quelconque des revendications précédentes, caractérisée en ce que ledit noyau de fixation (8) est constitué d'une articulation élastique et comporte un axe central de fixation (11) et un tube intermédiaire (12) reliés l'un à l'autre par des coussins élastiques adhérisés (13).

## Patentansprüche

1. Schwingarm mit Eignung zur erneuten Drehmomenterhöhung für einen Fahrzeugmotor, insbesondere für die Pendelaufhängung einer Antriebsmotorbaugruppe mit Automatikgetriebe, mit einem elastischen Rohrgelenk (3) an zumindest einem seiner Endabschnitte, wobei dieses einen inneren Befestigungskern (8) und zumindest ein Polster (10) aus elastischem Material aufweist, das den Kern (8) mit der Innenfläche eines äußeren rohrförmigen Basisteils (9) mittels Kleben verbindet,
**dadurch gekennzeichnet, daß**
das oder die Polster (10) einer Vorspannung ausgesetzt sind, die in Hauptrichtung der auf den Schwingarm wirkenden Zug- und Druckbeanspruchung, d.h. in seiner Axialrichtung, ausgerichtet ist, wobei diese Vorspannung einen solchen Richtungssinn hat, daß in dem Fall, in dem der Schwingarm aufgrund der Antriebskraft des Motors bei Verlangsamung einer restlichen Axialbeanspruchung (Fd) ausgesetzt ist und sich das Automatikgetriebe in der Position "drive" (Vorwärtsfahren) befindet, das oder die Polster (10) die Form wieder annehmen, für die sich der Arbeitspunkt (P') ungefähr in der Mitte seines Bereiches (r) mit minimaler Steilheit befindet.

2. Schwingarm nach Anspruch, dadurch gekennzeichnet, daß das Aufrechterhalten einer Vorspannung des oder der Polster (10) durch einen festen Keil (14) abgesichert wird, der im wesentlichen auf der Achse des Schwingarms zwischen das Gehäuse (1) des Schwingarms und den Kern (8) eingebracht ist.

3. Schwingarm nach Anspruch 1 oder 2, dadurch gekennzeichnet, daß zwei Polster (10) vorgesehen sind und diese bezüglich der Achse des Schwingarms geneigt sind.

4. Schwingarm nach einem der vorhergehenden Ansprüche, dadurch gekennzeichnet, daß die Polster (10) so geformt sind, daß die Axialverschiebung des Befestigungskerns (8) nach der Montage des Schwingarms und nach dem Aufbringen der restlichen Axialbeanspruchung (Fd) diese in Radialposition zieht.

5. Schwingarm nach einem der vorhergehenden Ansprüche, dadurch gekennzeichnet, daß vor der Montage die Vorspannung in einer solchen Weise vorgesehen ist, daß die geometrische Achse des Befestigungskerns (8) bezüglich der geometrischen Achse des äußeren rohrförmigen Basisteils geringfügig axial versetzt ist.

6. Schwingarm nach einem der Ansprüche 2 bis 5, dadurch gekennzeichnet, daß dieser einen Druckanschlag (15) aufweist, der zum Keil (14) diametral entgegengesetzt liegt.

7. Schwingarm nach einem der vorhergehenden Ansprüche, dadurch gekennzeichnet, daß der Befestigungskern (8) ein elastisches Gelenk ist und eine Befestigungs-Mittelachse (11) und ein Zwischenrohr (12), die durch angeklebte elastische Polster (13) miteinander verbunden sind, aufweist.

## Claims

1. A torque take-up connecting rod for vehicle engine, particularly for the pendular suspension of a power unit with an automatic gearbox, of the type comprising, at least at one of its ends, a flexible tubular joint (3), in other words it comprises an inner fixing core (8) and at least one cushion of flexible material (10) which by adhesion connects the said core (8) to the inner surface of an outer tubular frame (9), characterised in that the cushion(s) (10) is/are subject to pre-stressing orientated in the principal direction of the traction and compression stresses which act on the connecting rod, in other words its axial direction, the direction of the said pre-stressing being such that when the connecting rod is subjected to a residual axial stress (Fd) due to the motive force of the engine upon deceleration, the automatic gear box being in the "drive" (forward gear) position, the cushion(s) (10) resume the form in which their function point (P') is situated approximately in the middle of their range (r) of minimal stiffness.

2. A connecting rod according to Claim 1, characterised in that the pre-stressing of the cushion(s) (10) is maintained by a rigid wedge (14) inserted between the body (1) of the connecting rod and the said hub (8), substantially on the axis of the connecting rod.

3. A connecting rod according to Claim 1 or 2, characterised in that the said cushion(s) (10) are two in number and are inclined on the axis of the connecting rod.

4. A connecting rod according to any one of the preceding Claims, characterised in that the moulding of the said cushions (10) is such that after installation of the connecting rod and application of the said residual axial stress (Fd), axial displacements of the said fixing hub (8) restores them to the radial position.

5. A connecting rod according to any one of the preceding Claims, characterised in that prior to installation, the said pre-stressing is such that the geometrical axis of the said fixing hub (8) is slightly offset axially in relation to the geometrical axis of the said outer tubular frame.

6. A connecting rod according to any one of Claims 2 to 5, characterised in that it comprises a compression stop (15) diametrally opposite the said wedge (14).

7. A connecting rod according to any one of the preceding Claims, characterised in that the said fixing hub (8) is constituted by a flexible articulation and comprises a central fixing arbor (11) and an intermediate tube (12) connected to each other by flexible cushions (13) secured by adhesion.
